# EUROPEAN PATENT APPLICATION

(11) **EP 1 363 430 A1**
(43) Date of publication of application: **19.11.2003**
(21) Application number: 02425294.2
(22) Date of filing: 14.05.2002
(51) Int. Cl.: H04L 12/58, H04Q 7/22

(54) **Message service communication system**

(71) Applicant: Sertea S.r.l., 24035 Curno (BG) (IT)
(72) Inventor: Manenti, Roberto, 24044 Dalmine (BG) (IT)
(74) Representative: Garavelli, Paolo

(57) **Abstract**

A system for managing and transmitting digital information comprises a messaging system that is able to send processed messages containing information extracted from different data bases according to selection criteria that are pre-fixed by a network manager. The messaging system provides for the option of establishing a commercial cooperation between the information managing network and a messaging system in managing and selling packets of messages of the SMS type.

## Description

A digital information managing and transmitting system is disclosed, such system operating by means of dedicated mobile centers - for example cellular systems connected to computer systems - that are able to:
- verify the identity of a user of a network;
- manage information about customers or subscribers to a network, both of the private and of the public type;
- manage network information;
in order to send carefully prepared and organised messages by means of a SMS (Short Message Service) type of messaging system.

The prior art disclosed in document EP-A1-1073243 deals with the use of a SMS-type messaging system connected to a particular service or entertainment platform. In order to inform mobile telephone users about certain Internet addresses, a protocol is used that is managed by a computer belonging to the network. This protocol allows transferring to the SMS messages managing center all necessary information to unscramble a certain Internet address associated with this entertainment platform.

A specific protocol equipped with particular algorithms transforms a piece of information into a string of commands able to identify a certain entertainment platform being present on the network.

A system of the above-described type does not take into account some peculiarities dealing with: the collection of information coming from different data bases; the transmission of prepared and processed messages to and from a network that uses mobile telephones to communicate; the transmission of reserved information for a network customer according to a planned connection procedure; the degree of privacy protection for the user himself and his addresses.

The main object of the invention disclosed in the present document is providing a system for managing and transmitting digital information by means of a messaging system that is able to:
- verify and identify a system user;
- manage information about customers or subscribers to a network;
- manage network information;
- safeguard network users privacy;
in order to send a prepared and organised message in a predefined and careful way, as a result of processing information collected from different data bases according to prefixed criteria.

A further object of the present invention is the efficient protection of user privacy, such user being able to choose whether keeping his own telephone numbers secret, or deciding to make his own data available as regards external operators.

The above and other objects and advantages of the invention, as will appear from the following description, are obtained by a messaging system as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Fig. 1 shows a network in which the communication system is connected to a SMS-type messaging service center;
- Fig. 2 shows a telephone/Internet connection that allows transferring information dealing with an Internet platform;
- Fig. 3 shows a card related to information treated within the network;
- Fig. 4 shows an example of managing a piece of information deriving from a combination of data taken from different data bases made available to the network and the related messaging service connected to the network; and
- Fig. 5 shows an example dealing with managing information with reference to the main tasks of a bank as regards its customers and the exchange values of listed securities.

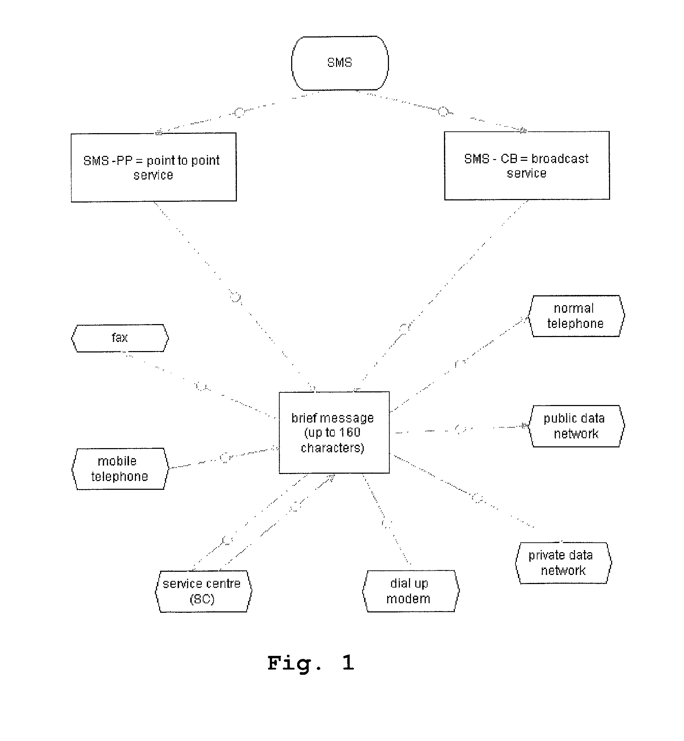

With reference to the Figures, a service among individual users or a service within a broadcast based on a SMS-type messaging system allows transmitting messages (up to 160 characters long) putting in communication, and therefore being able to manage: a modem, a fax, a mobile telephone, a Service Center (SC), a public or private network, a normal telephone (Fig. 1).

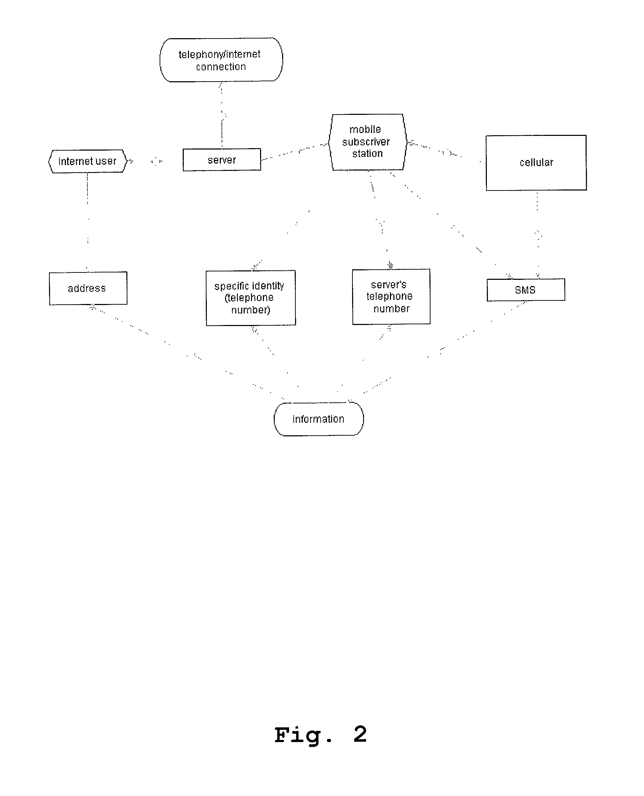

A piece of information is able to identify: an Internet address, a telephone number, a server telephone number, establishing a connection between (fixed and mobile) telephone network and Internet network (Fig. 2).

A network 3, defined as group of users or subscribers connected for exchanging information by means of a prefixed communication service, uses a computer and a server 7,8 to manage different data bases, each data base containing information and data that are the object of an exchange of information among the subscribers of the network itself. For example; a data base 7 contains a list of information dealing with a set of generic news such as: name, surname, children, date of birth, and the like, associated with a set of specific news like: birthday date, hobbies, cultural subjects, nationality, etc. On the same trace a data base 8 contains dates of particular general-purpose events such as holidays, Christmas or Easter holidays, etc.

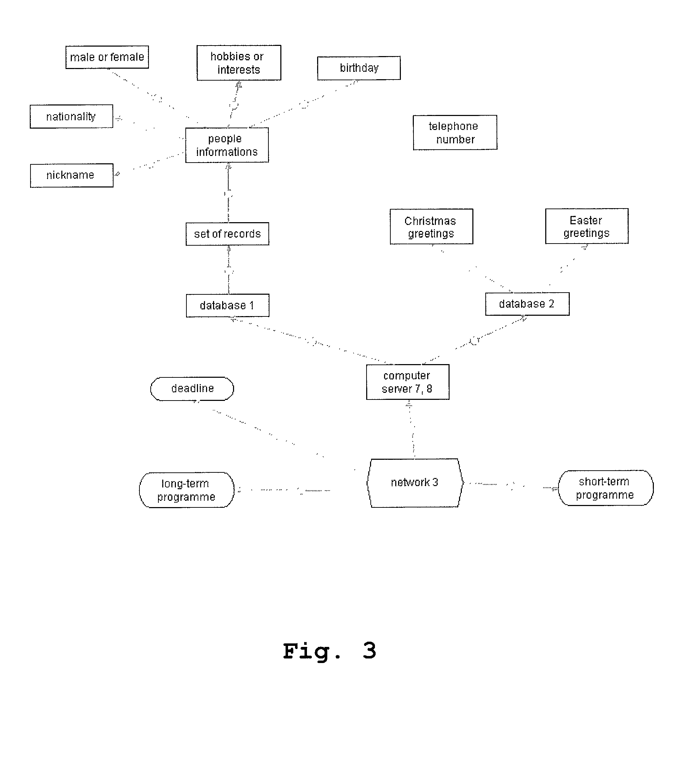

Computer and server 7, 8, by means of a managing system residing on external operator server, or through a managing system residing on the user PC, manage a time planning program dealing with the date on which specific information have to be sent by means of a SMS-type messaging system as regards users or subscribers belonging to the network. A selection procedure of specific pieces of information contained in the above-mentioned data bases associates specific addresses to which a message has to be sent (Fig. 3).

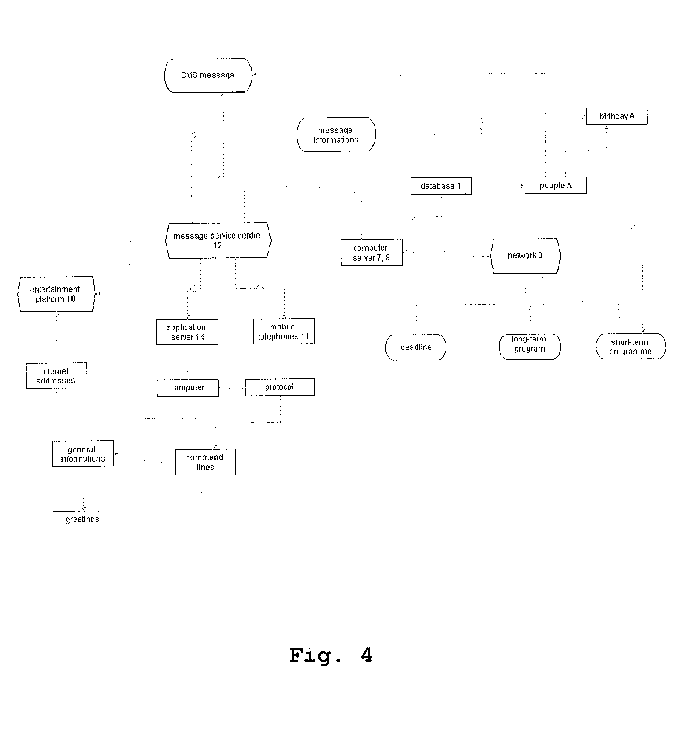

A first example deals with:
- the selection associating specific events such as Christmas and Easter with users of a company;
- the automatic shipment of greetings messages;
by means of a messaging service of the SMS type according to a short- or long-term time programming. A similar example to the above-mentioned one deals with the name selection of specific network users associating their respective date of birth to the day in which the greetings message has to be sent (Fig. 4).

A computer 7, by means of a server 8, sends the selected information (person A, date of birth associated with this person A, message transmission expiry time) to a SMS-type Messaging Service Center (MSC) 12.

The Messaging Service Center (MSC) 12 comprises a server 14 and a computer equipped with a specific protocol able to manage and translate these personal information in the form of command lines. These command lines contain the combination of these information about general network personnel data with specific information such as greetings sentences, Internet entertainment platform addresses, etc.

A particular Internet address deals with a specific entertainment platform 10 that allows displaying specific entertainment areas in agreement with the subject of the message/information to be addressed to the network personnel.

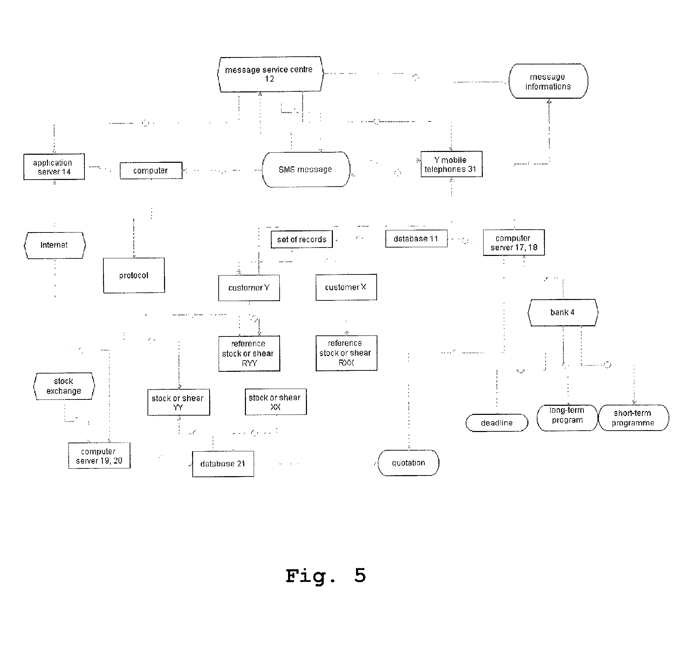

A second example deals with the selection and transmission of information by a bank 4, according to a predefined time planning, as regards customers that subscribed listed securities. Also in this case reference is made to the SMS-type messaging system (Fig. 5).

A data base 11 contains:
- a set of information dealing with general data about bank or Intermediate Company customers;
- the list of listed securities associated with respective customers;
- the value of each listed security, this value being included starting from a specific date programmed by means of a computer and a server 17, 18.

A messaging service center 12 receives these pieces of information by the bank through these computer and server 17, 18. For example: the RYY listed security purchased by bank customer Y is displayed by means of the connection of said computer and server 17, 18 to computer and server 19, 20 managed by the data processing center of the stock exchange dealing with all titles or foreign currencies or negotiations by means of these telematic tools.

A server 14 processes these pieces of information by means of a specific protocol able to return and manage as SMS a set of information of the type:
- connections to Internet platforms specific for those titles in which bank customer Y is interested;
- numeric values as result of extrapolations and trends;
- numeric values adapted to provide, in a form complying with the messaging service, feelings related to this specific title RYY.

A further characteristics of an information managing system of the present invention deals with the option that established a commercial cooperation between a network 3 and a messaging center (MSC) 12 for managing and selling packets of messages of the SMS-type. A user of a network comprising an information system based on SMS-type messaging, employs an information system including advertising messages, that can be divided into communication environment, according to the mentioned Nation, Province or Municipality, whose implementation occurs due to the automatic execution of a protocol associated with the computer connected to the server 14 that manages the sale of advertising messages; in other words, this protocol manages an advertising data base organised into national or local (micro-advertising) environments and combined with the main pieces of information that are the subject of a message.

The digital information managing system of the above-described type can be used in several forms, as can be shown in the description of further communication systems in a non-limiting example of the scope of the invention.

A Publishing, Music or Motion Picture Company, as well as an individual Singer or Music Group, manages an Internet entertainment platform to which individual Artist Fans or Fans Clubs can subscribe. The artistic news regarding the various artists are disclosed through a messaging system of the SMS-type that exploits an added value due to advertising messages enclosed to main messages, or through SMS packets free from advertisments that are sold in pre-paid packets to the entertainment platform manager.

Through a quite similar system, a professional firm, a local body, a public service organisation (Civil Protection), a Church, a religious body, a voluntary structure can use the SMS transmission system to provide a service for their own users, simultaneously promoting a sponsoring system from anyone wishing to help such Operator.

## Claims

1. System for managing and transmitting digital information by means of a messaging system that is able to:
- verify and identify a system user;
- manage information about customers or subscribers to a network;
- manage network information;
**characterised in that** said system allows sending a prepared and organised message in a predefined and careful way, as a result of processing information collected from different data bases according to prefixed criteria.

2. System according to Claim 1, **characterised in that** an operating system residing on a user PC allows keeping telephone numbers secret and filtering a reception of undesired messages or, if chosen, leaving the telephone numbers available to external operators.

3. System according to Claim 1, **characterised in that** a network (3) uses a computer and a server (7, 8), through a managing system residing on an external operator server, or through a managing system residing on a user PC, to manage different data bases, each one containing information and data composing the information exchange subject among subscribers of the network itself.

4. System according to Claim 1, **characterised in that** said computer and server (7, 8), through a managing system residing on an external operator server, or through a managing system residing on a user PC, manage a time planning program dealing with the expiry date on which specific information have to be sent by means of a SMS-type messaging system as regards users or subscribers belonging to the network.

5. System according to Claim 1, **characterised in that** a selection procedure of specific pieces of information contained in said data bases associates specific addresses to which a message has to be sent.

6. System according to Claim 1, **characterised in that** the selection associating specific events such as Christmas and Easter to users of a company and the automatic shipment of greetings messages obtained from the combination of said events with general user data occurs by means of a SMS-type messaging service according to a time schedule.

7. System according to Claim 6, **characterised in that** a computer (7), by means of a server (8), sends the selected pieces of information to a SMS-type Messaging Service Center (MSC) (12).

8. System according to Claim 6, **characterised in that** said Messaging Service Center (MSC) (12) comprises a server (14) connected to a computer equipped with a specific protocol that is able to manage and translate said pieces of information as command lines, in addition to unscrambling the specific address of Internet entertainment platforms, etc.

9. System according to Claim 6, **characterised in that** a data base (11) containing:
- a set of pieces of information dealing with general bank customers data;
- the list of listed securities associated with respective customers;
- the value of each listed security, said value being included starting from a specific date programmed by means of a computer and a server (17, 18);
is associated with a data base managed by a remote system like a computer and a server (19, 20) managed by a data processing center of a stock exchange; a server (14) processing data by means of a specific protocol, returns and manages as SMS a set of pieces of information to be sent to a specific customer.

10. System according to Claim 1, **characterised in that** a commercial cooperation is provided between a network (3) and a messaging center (MSC) (12) in managing and selling packets of messages of the SMS type.

11. System according to Claim 10, **characterised in that** a network user exploits a set of pieces of information comprising advertising messages that can be divided into communication environments, according to mentioned Nation, Province or Municipality (micro-advertising), whose implementation occurs by automatically executing a protocol associated with the computer connected to the server (14) managing the sale of advertising messages.
